# EUROPEAN PATENT SPECIFICATION

(11) **EP 1 701 057 B1**
(45) Date of publication and mention of the grant of the patent: **14.07.2010**
(21) Application number: 06110681.1
(22) Date of filing: 06.03.2006
(51) Int. Cl.: F16F 13/14

(54) **Hydroelastic mounting, in particular for connecting a propulsion unit to a vehicle**
Hydroelastisches Lager, insbesondere zum Lagern eines Antriebs in einem Fahrzeug
Support hydroélastique, en particulier pour supporter un moteur dans un véhicule

(30) Priority: 08.03.2005 IT TO20050147
(43) Date of publication of application: 13.09.2006
(73) Proprietor: C.F. GOMMA S.p.A., 25050 Passirano (Brescia) (IT)
(72) Inventor: Gazzoli, Gianenrico, I-25035 Ospitaletto (Brescia) (IT); Vettore, Claudio, I-25086 Rezzano (Brescia) (IT); Orizio, Damiano, I-25050 Passirano (Brescia) (IT)
(74) Representative: Quinterno, Giuseppe

(56) References cited:
- DE-A1- 10 029 267
- DE-A1- 10 146 154
- DE-A1- 10 213 627
- DE-A1- 10 259 624
- FR-A- 2 810 712
- FR-A- 2 832 477
- US-A- 4 998 345
- US-A- 5 007 304
- US-A1- 2001 017 436

## Description

The present invention refers to a hydroelastic mounting according to the preamble of the appended Claim 1.

As it is known, the engines of motor vehicles are connected to the frame or car body by means of mountings, generally provided with rubber portions. These elements take a primary role with regard to the reduction of vibration and the acoustic comfort. An engine mounting based on rubber portions is characterized by static and dynamic stiffness values and damping value, which are peculiar for each main direction of the vibrations to which it is subjected.

In order to improve the behavior of a motor vehicle subjected to vibrations, it is desirable for engine mountings to have high static stiffness, low dynamic stiffness and high damping properties, in particular for low frequency vibrations.

In these engine mountings, the dynamic stiffness and the damping level are depending from the amplitude and the frequency of the vibrations to be damped. Particularly for engine mountings with high damping properties, the dynamic stiffness increases with the frequency and amplitude. Hence, a high damping level is not compatible with low dynamic stiffness values for high frequencies.

Engine mountings according to the prior art comprise generally two armatures connected one to the other by means of an elastomer. This elastomeric mass can comprise a high damping material or a low damping material which has low stiffness properties. As described above, there are not high damping material having low dynamic stiffness properties and it is advisable to find a compromise between these two parameters. French Patent Application FR-A-2 832 477 discloses a hydroelastic mounting adapted to be interposed between a vibrating element and a bearing element, in particular for the connection between a propulsion unit and a frame structure of a vehicle, comprising a casing intended to be connected to the bearing element and house a body including:
an inner armature intended to be connected to the vibrating element;
a substantially tubular outer armature surrounding the inner armature and
an elastomeric mass connecting and encasing the inner armature and outer armature, and defining:
   - a working chamber opened at the radial periphery of said elastomeric mass; and
   - an expansion chamber which contains a fluid adapted to move between the latter and the working chamber through one associated connection conduit, which is obtained in and defined by said elastomeric mass and;
said working chamber and said expansion chamber comprising at least one respective elastically deformable wall, and being fluid-tight closed by the casing;
said first connection conduit comprising a channel-like shaped groove.

An object of the present invention is to provide a mounting of the type above specified, which has a high structural simplicity, as well as good damping and dynamic stiffness characteristics.

This and other objects are achieved by the invention with a hydroelastic mounting according to the appended Claim 1.

Further characteristics of the invention will be made clear in the following detailed description, provided purely by way of non limiting example, with reference to the drawings, in which:
Figure 1 is a perspective view of a hydroelastic mounting according to the invention;
Figure 2 is a plan view from above according to the direction of the arrow II of Figure 1;
Figures 3 to 5 are transverse sectioned views respectively according lines III-III, IV-IV e V-V of Figure 2;
Figure 6 is a perspective view of an embodiment of an armature of a hydroelastic mounting according to the invention;
Figure 7 is a top view representing a sub-assembly of a hydroelastic mounting according to the invention, particularly an elastomeric mass encasing the armature of Figure 6;
Figure 8 is a bottom view of the sub-assembly shown in Figure 7;
Figure 9 is a side view of the sub-assembly according to the arrow IX of Figure 8; and
Figure 10 is a perspective view showing a variant of the group of figures 7 to 9.

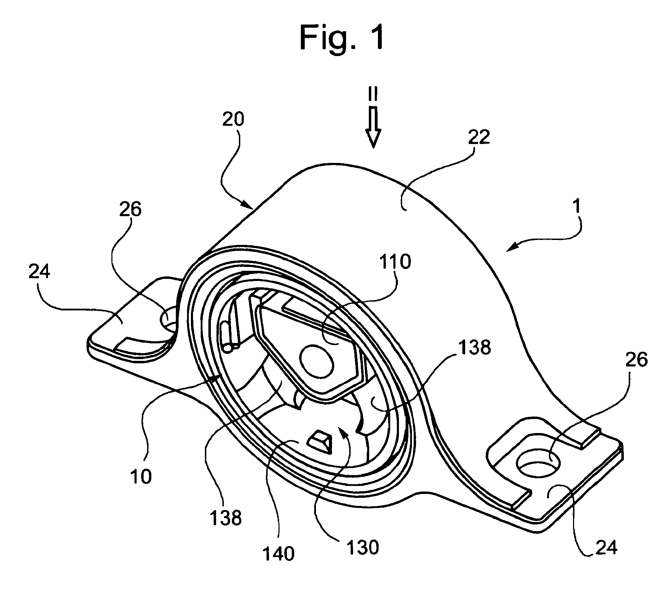

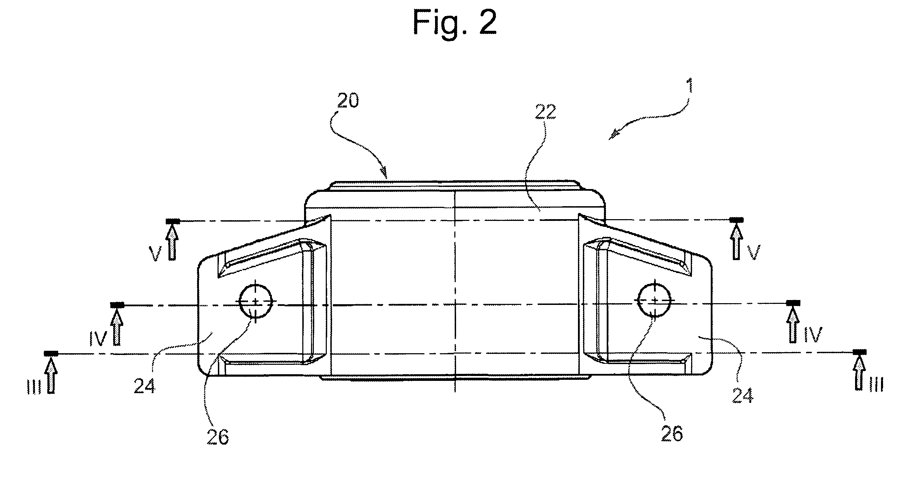

With reference in particular to Figure 1 and 2, a hydroelastic mounting according to the invention is generally indicated 1, adapted to be interposed between a first element to be supported, particularly a propulsion unit or engine (not shown), and a bearing element, particularly the frame of a motor vehicle (not shown). The hydroelastic mounting 1 comprises a body 10 housed in a metallic casing 20, as an example made of metal.

The casing 20 comprises an intermediate portion 22, substantially shaped as a hollow cylinder and susceptible to form a fluid-tight housing for the body 10, which has an essentially complementary shape or form. Such casing 20 further comprises a couple of wing portions 24 having holes 26 to consent its connection to the frame of the motor vehicle, for instance by means of screws (not shown).

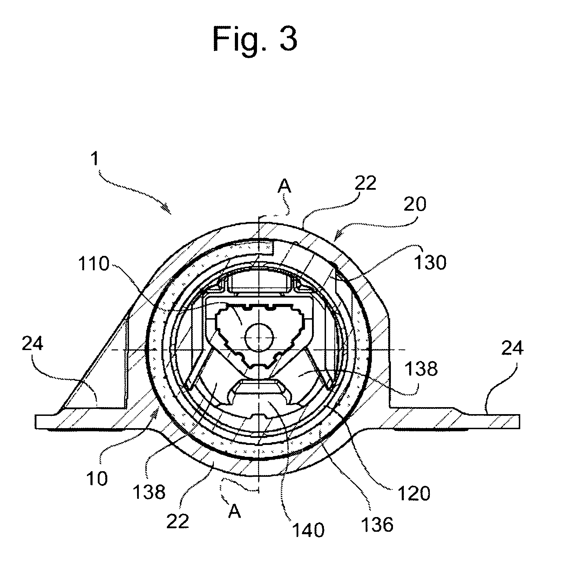

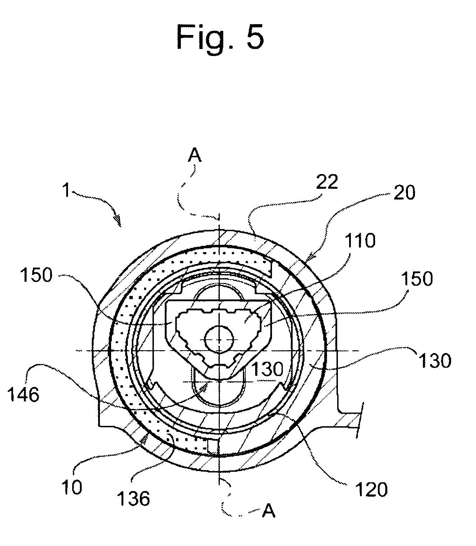

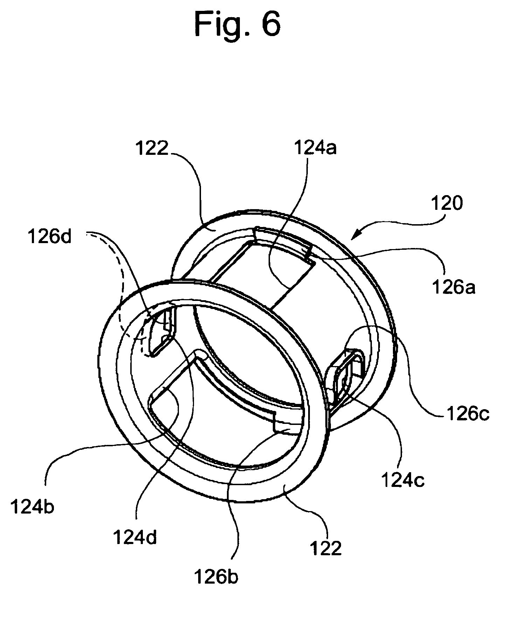

Referring particularly to Figure 3, 4 and 5, the body 10 comprises a solid prismatic core 110, intended to be connected to the engine, a hollow armature 120 being external to and advantageously coaxial with the core 110 (see also Figure 6), and a shaped elastomeric mass 130, formed (over-molded) onto the armature 120 and onto the core 110, in such a way as to connect them one to the other.

The core 110 can be conveniently made of steel or lightweight alloy and can be lightened in an appropriate way. The elastomeric mass 130 includes at its interior the core 110, it leaves exposed a terminal face of the latter (as it can be seen in Figures 1 and 3 to 5), it covers completely the armature 120, and it is interposed between the latter and the casing 20 when the hydroelastic mounting 1 is assembled.

In Figure 6 an embodiment of the armature 120 is shown. Preferably but non necessarily, the armature 120 has externally bent ends or collar flanges 122, which contribute, together with the elastomeric mass 130, to ensure the fluid-tightness between the body 10 and the casing 20.

The armature 120 further comprises a plurality of substantially rectangular-shaped apertures 124a-124d. In a portion of their contour, such apertures can conveniently be provided of corresponding edges 126a-126d being radially projected towards the exterior of the armature 120. The functions of the apertures 124a-124d and of the corresponding edges 126a-d will be set forth in the present description.

The armature 120 can be made of lightweight steel (e.g. by deep drawing), thermoplastic material (e.g. by molding), or thermoforming material. In an alternative embodiment (not shown), the armature 120 can be manufactured in two or more parts which can be coupled, as an example by snap-engagement, or welded one to the other.

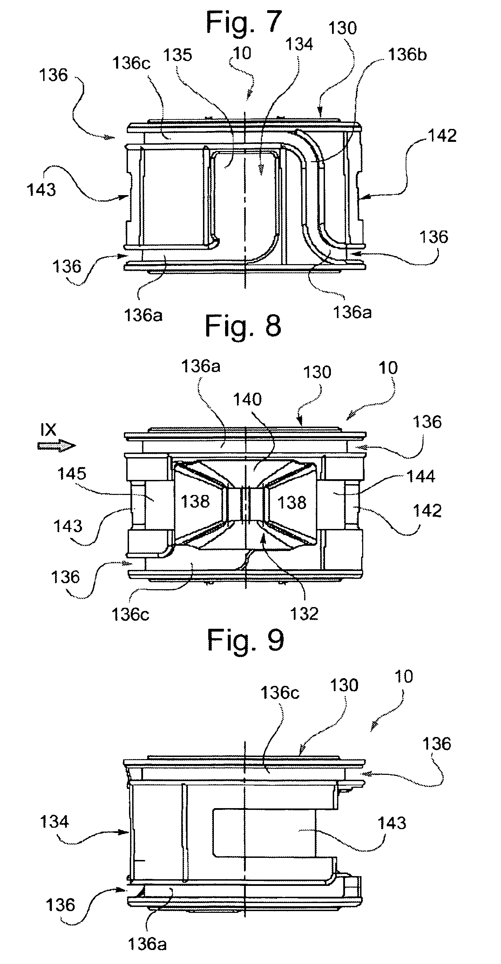

With reference in particular to Figure 7, 8 and 9, the elastomeric mass 130, which includes and connect the armature 120 to the core 110, has a variously shaped structure. In particular, such elastomeric mass 130 forms a lower working chamber 132 and an upper expansion chamber 134, which are diametrically opposed, opened and facing towards the casing 20, and containing a fluid intended to move alternatively therebetween during operation. As is known *per se,* such fluid can comprise, as an example, a substance in a liquid, gel or gaseous state as well.

The alternative motion of the fluid occurs through a connection conduit 136 connecting the working chamber 132 and the expansion chamber 134. The working chamber 132, the expansion chamber 134 and the connection conduit 136 are entirely made on and recessed in the elastomeric mass 130, and opened, at the periphery of the latter, towards the casing 20. In the present embodiment, which is illustrated by way of example, the connection conduit 136, which is channel-shaped, follows a path which, starting for instance from the expansion chamber 134 (Figure 7), has a first section 136a extending as an almost circumferential arc along one side of the body 10, then a substantially S-shaped intermediate section 136b (Figure 7), which extends from one side to the other of the body 10, and ultimately an almost semi-circumferential end section 136c, which reaches the working chamber 132 (Figure 8) along the side of the body 10 which is opposite to the one wherein the first section 136a of the conduit 136 extends.

The body 10 and the casing 20, when they are assembled, ensure the fluid-tightness of the working chamber 132, the expansion chamber 134 and the connection conduit 136. Particularly, the peripheral edges of the lateral walls or sides of the channel-like conduit 136 engage the internal surface of the casing 20 in a fluid-tight manner. The filling of the chambers 132 and 134 can be made in a tub during the assembly of the hydroelastic mounting 1, or by means of vacuum after the assembly.

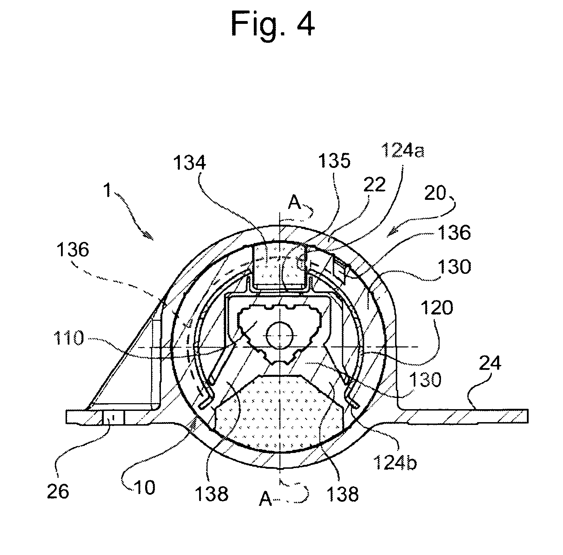

With reference in particular to Figures 4 and 8, the working chamber 132 has an elastically deformable vault-like portion being shaped as a truncated pyramid, delimited by two connection arms 138 interconnected by a couple of membrane-like walls 140 (Figures 3 and 8). Such arms 138 and said walls 140 are integral portions of the elastomeric mass 130 joining the core 110 to the armature 120.

The working chamber 132 is peripherally delimited by a wall of the intermediate portion 22 of the casing 20. The expansion chamber 134 is delimited by an elastically deformable membrane-like portion 135 (Figure 7) of the elastomeric mass 130, over-molded on the armature 120 in the upper aperture 124a (Figure 4).

The molding of the elastomeric mass 130 onto the core 110 and the armature 120 is made in such a way that walls of the working chamber 132 and expansion chamber 134 pass, at least partially, respectively through the lower aperture 124b and the upper aperture 124a (see in particular Figure 4). In addition the upper projecting edge 126a and the lower projecting edge 126b, respectively of the apertures 124a and 124b (Figure 6), are located along lateral wall or side portions of the connection conduit 136, in order to reinforce it.

The embodiment shown in the appended drawings consents a damping of vibrations between the frame and the engine of the motor vehicle in a diametral direction (axis A-A, Figures 3, 4 and 5) substantially parallel to the vertical axis of the motor vehicle.

In order to obtain a damping effect even in a diametral direction substantially parallel to the one corresponding to the movement of the motor vehicle, it is possible to make on the elastomeric mass a second working chamber and a second expansion chamber, which are susceptible to contain a fluid adapted to move therebetween through at least a second connection conduit (variant not shown). Such chambers can be located in a substantially orthogonal direction with respect to the line A-A. Structurally, the second working and expansion chambers, and the second connection conduit can advantageously have the same shape and characteristics of the ones previously described.

In the use of a hydroelastic mounting 1 according to the invention, the vibrations transmitted by the road and the engine during the movement of the motor vehicle are adapted to cause the alternative motion of the fluid contained between the working chamber 132 and the expansion chamber 134, until such vibrations reach a determined frequency. At higher frequencies the fluid in the conduit 136 cannot complete the whole path between the chambers 132 and 134 and, as a consequence, the dynamic stiffness increases. Thus, in case of high frequency vibrations, the damping effectiveness would be negatively effected.

As it is illustrated in detail in Figures 7 to 9, the elastomeric mass 130 has, on its outer surface, advantageously two auxiliary expansion chambers 142, 143, which are made in a manner similar to the expansion chamber 134. In other variants of embodiment, it is possible to avoid the use of such auxiliary chambers, or to provide only one of them, which would have the same effect on the performances of the hydroelastic mounting 1 as a decoupling valve (or "clapet de decouplage" according to the French wording) of the type known per se (and set forth in the present description).

The auxiliary expansion chambers 142, 143 are located in diametrically opposed positions in the elastomeric mass 130 with respect to the core 110, and are located in a substantially orthogonal direction with respect to the one identified by the line A-A. The auxiliary expansion chambers 142, 143 are associated to auxiliary conduits 144, 145 which are channel-like grooved and recessed in the elastomeric mass 130, and which connect said auxiliary chambers 142, 143 to the working chamber 132 (Figure 8). The auxiliary conduits 144, 145 are suitably dimensioned, particularly with regard to the length and section, in order to consent a determined dynamic stiffness and a correspondent damping level for the vibrations having a predetermined frequency, e.g. included between 80Hz and 180Hz, to reduce the noise due to the oscillations.

Referring to Figure 6, it should be noted that walls of the auxiliary chambers 142, 143 pass respectively through the side apertures 124c and 124d of the armature 120, similarly to what has been described for the apertures 124a and 124b. Furthermore, the projecting edges 126c and 126d of the armature 120 are susceptible to reinforce, at least partially, walls of said auxiliary chambers 142, 143.

In further embodiments (not shown) such passages 144, 145 have different dimensions, in such a way as to ensure a damping level which is satisfactory for a plurality of different operative conditions of the hydroelastic mounting 1.

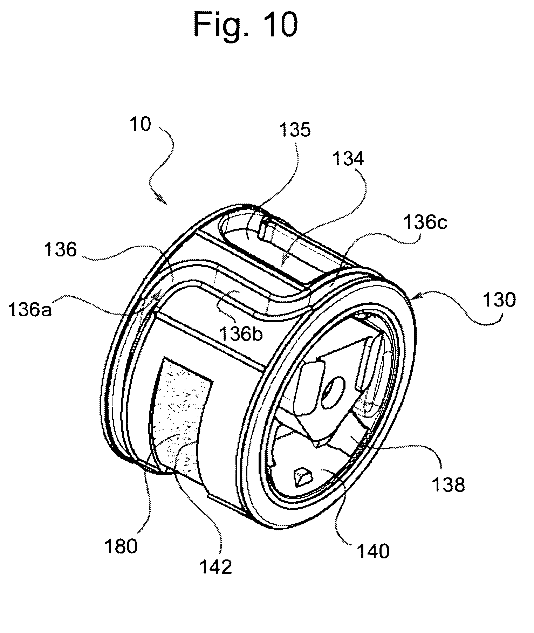

With reference to the variant of embodiment shown in Figure 10, one or more auxiliary chambers 142, 143 (only one of them is visible in said figure) can optionally comprise, at their interior, so-called "decoupling elements" 180 which are made of, as an example, a close cells sponge elastomer, and which contain air therein. Owing to the compression of the air contained inside the decoupling elements 180, it is allowed a supplementary volume variation of the auxiliary chambers 142, 143, reducing by a further fraction the dynamic stiffness due to the vibrations of the hydroelastic mounting 1, even in case of high frequency oscillations.

In the case that the elastomeric mass 130 comprises a first and a second working chamber, it is possible to conceive the use of a couple of decoupling valves, each of them being associated to the first and, respectively, to the second working chamber.

Clearly, provided that the principle of the invention is retained, the embodiments and the details of construction can vary widely from what has been described and illustrated purely by way of non-limiting example, if not thereby departing from the scope of the invention as defined in the attached claims.

## Claims

1. A hydroelastic mounting (1) adapted to be interposed between a vibrating element and a bearing element, in particular for the connection between a propulsion unit and a frame structure of a vehicle, comprising a casing (20) intended to be connected to the bearing element and house a body (10) including:
an inner armature (110) intended to be connected to the vibrating element;
a substantially tubular outer armature (120) surrounding the inner armature (110); and
an elastomeric mass (130) connecting and encasing the inner armature (110) and outer armature (120), and defining:
- a working chamber (132) opened at the radial periphery of said elastomeric mass (130); and
- an expansion chamber (134) which contains a fluid adapted to move between the latter and the working chamber (132) through one associated connection conduit (136), and which is obtained in and defined by said elastomeric mass (130); and
said working chamber (132) and said expansion chamber (134) comprising at least one respective elastically deformable wall (138, 140, 135), and being fluid-tight closed by the casing (20);
said first connection conduit) comprising a channel-like shaped groove (136);
said hydroelastic mounting being **characterized in that**
said channel like shaped groove is made in the *radial* periphery of the elastomeric mass (130) and fluid-tight closed by the casing (20) and comprises:
- first and second sections (136a, 136c) which extend respectively as almost circumferential and almost semi-circumferential sections along two opposed *axial borders* of the radial periphery of elastomeric mass (130), and
- an intermediate section (136b) connecting the first and second sections (136a, 136c);
**in that** the expansion chamber (134) is opened at the radial periphery of the elastomeric mass (130) and is diametrally opposite to the working chamber (132); and
**in that** the outer armature (120), at each of its outwardly projecting ends, has a collar flange (122), covered with said elastomeric mass (130) and cooperating with the casing (20) to ensure fluid-tightness of *the groove (136).*

2. A hydroelastic mounting according to Claim 1, wherein said first and second sections (136a, 136c) communicate respectively with the expansion chamber (134) and the working chamber (132).

3. A hydroelastic mounting according to Claim 1 or 2, further comprising a second working chamber and a second expansion chamber located in a substantially orthogonal direction with respect to the one (A-A) defined by the first working chamber (132) and the first expansion chamber (134), and susceptible to contain a fluid adapted to move between them through at least one second connection conduit.

4. A hydroelastic mounting according to any one of the preceding claims, wherein the elastomeric mass (130) further defines at least one further auxiliary chamber (142, 143) opened at the periphery of said elastomeric mass (130) and communicating with said at least one working chamber (132) by means of at least one auxiliary conduit (144, 145).

5. A hydroelastic mounting according to Claim 4, wherein said at least one auxiliary conduit comprises a channel-like shaped groove (144, 145) obtained in the periphery of the elastomeric mass (130).

6. A hydroelastic mounting according to Claim 4 or 5, having a first and a second auxiliary chamber (142, 143) located in the elastomeric mass (130) in diametrically opposite positions with respect to the inner armature (110).

7. A hydroelastic mounting according to any of claims 4 to 6, wherein said at least one auxiliary conduit (144, 145) has a length and a section adapted to cause a damping for vibrations having a predetermined frequency field.

8. A hydroelastic mounting according to Claim 7, wherein said predetermined frequency field is substantially comprised between 80Hz and 180Hz.

9. A hydroelastic mounting according to any of claims 4 to 8, wherein said at least one auxiliary chamber (142, 143) includes at its interior a decoupling element (180).

10. A hydroelastic mounting according to Claim 9, wherein the decoupling element (180) is made of a close cells sponge elastomer.

11. A hydroelastic mounting according to any of the preceding claims, wherein the outer armature (120) has at least one aperture (124a-d) through which passes an over-molded portion (138, 140, 135) of the elastomeric mass (130) intended to define a respective working, expansion or auxiliary chamber (132, 134, 142, 143).

12. A hydroelastic support according to Claim 11, wherein said at least one aperture (124a-d) has, along part of its contour, a projecting edge (126a-d) facing radially outwards and adapted to reinforce portions of the elastomeric mass (130) along the walls of said at least one connection conduit (136) or of said auxiliary chambers (142, 143).

13. A hydroelastic support according to any of the preceding claims, wherein the outer armature (120) is made of steel by deep drawing.

14. A hydroelastic mounting according to any of claims 1 to 12, wherein the outer armature (120) is made of thermoplastic material by molding or of thermosetting material.

15. A hydroelastic support according to any one of the preceding claims, wherein the outer armature (120) comprises two portions assembled one to the other.

16. A hydroelastic mounting according to any of the preceding claims, wherein the inner and outer armatures are respectively a solid prismatic-sectioned core (110) and a substantially cylindrical armature (120) coaxial with said core (110).

17. A hydroelastic mounting according to any of the preceding claims, wherein the working chamber (132) comprises a vault-like portion defined by
at least one couple of arms (138) of the elastomeric mass (130) connecting the inner armature (110) and the outer armature (120); and
at least one couple of membrane walls (140) of the elastomeric mass (130) interposed among the arms (138) and said inner (110) and outer (120) armatures.

18. Vibrating system comprising a vibrating element and a bearing element, being interconnected by a hydroelastic mounting (1) according to any one of the preceding claims.

## Patentansprüche

1. Hydroelastisches Lager (1), welches ausgebildet ist, um zwischen einem Vibrationselement und einem tragenden Element angeordnet zu werden, insbesondere zur Verbindung zwischen einem Antriebsteil und einer Rahmenkonstruktion eines Fahrzeugs, welches ein Gehäuse (20) umfasst, welches dazu dienen soll, um mit dem tragenden Element verbunden zu werden und um einen Körper (10) zu beherbergen, welches umfasst:
einen Innenanker (110), der mit dem Vibrationselement verbunden werden soll;
einen im Wesentlichen rohrförmigen Außenanker (120), der den Innenanker (110) umgibt; und
eine Elastomer-Masse (130), welche den Innenanker (110) und den Außenanker (120) verbindet und umschließt, und begrenzt:
- eine Arbeitskammer (132), welche an der radialen Peripherie der Elastomer-Masse (130) geöffnet ist; und
- eine Expansionskammer (134), welche ein Fluid enthält, welches ausgebildet ist, um zwischen dem Letzteren und der Arbeitskammer (132) über einen damit in Verbindung stehenden Verbindungskanal (126) sich zu bewegen, und welche enthalten ist in und begrenzt ist durch die Elastomer-Masse (130); und
wobei Arbeitskammer (132) und Expansionskammer (134) zumindest eine jeweilige elastisch-deformierbare Wand (138, 140, 135) umfassen und fluid-dicht durch das Gehäuse (20) verschlossen sind;
wobei der erste Verbindungskanal eine kanalförmig-geformte Nut (136) umfasst;
wobei das hydroelastische Lager **dadurch gekennzeichnet ist, dass** die kanalförmig-geformte Nut in der radialen Peripherie der Elastomer-Masse (130) gebildet ist und durch das Gehäuse (20) fluid-dicht verschlossen ist, und umfasst:
einen ersten und einen zweiten Abschnitt (136a, 136c), welche sich jeweils als fast Umfangs- und fast Halb-Umfangs-Abschnitten längs zwei abgewandten axialen Rändern der radialen Peripherie der Elastomer-Masse (130) erstrecken, und
- einen Zwischenabschnitt (136b), der den ersten und den zweiten Abschnitt (136a, 136c) verbindet;
und dass die Expansionskammer (134) bei der radialen Peripherie der Elastomer-Masse (130) offen ist und diametral abgewandt zur Arbeitskammer (132) ist; und
dass der Außenanker (120) bei jedem seiner nach außen ragenden Enden einen Flansch (122) hat, der mit der Elastomer-Masse (130) überdeckt ist und mit dem Gehäuse (20) funktionsmäßig zusammenwirkt, um Fluiddichte der Nut (136) sicherzustellen.

2. Hydroelastisches Lager nach Anspruch 1, wobei der erste und der zweite Abschnitt (136a, 136c) mit der Expansionskammer (134) bzw. der Arbeitskammer (132) kommunizieren.

3. Hydroelastisches Lager nach Anspruch 1 oder 2, welches außerdem eine zweite Arbeitskammer und eine zweite Expansionskammer umfasst, welche in einer im Wesentlichen orthogonalen Richtung in Bezug auf die eine (A-A) angeordnet ist, welche durch die erste Arbeitkammer (132) und die erste Expansionskammer (134) begrenzt ist, und zugänglich ist, um ein Fluid aufzunehmen, welches geeignet ist, sich zwischen diesen über zumindest einen zweiten Verbindungskanal zu bewegen.

4. Hydroelastisches Lager nach einem der vorhergehenden Ansprüche, wobei die Elastomer-Masse (130) außerdem zumindest eine weitere Hilfskammer (142, 143) begrenzt, welche an der Peripherie der Elastomer-Masse (130) offen ist und mit der zumindest einen Arbeitskammer (132) mittels zumindest einem Hilfskanal (144, 145) kommuniziert.

5. Hydroelastisches Lager nach Anspruch 4, wobei der zumindest eine Hilfskanal eine kanalförmig geformte Nut (144, 145) aufweist, welche in der Peripherie der Elastomer-Masse (130) enthalten ist.

6. Hydroelastisches Lager nach Anspruch 4 oder 5, welches eine erste und eine zweite Hilfskammer (142, 143) hat, welche in der Elastomer-Masse (130) bei diametral ab gewandten Positionen in Bezug auf den Innenanker (110) angeordnet sind.

7. Hydroelastisches Lager nach einem der Ansprüche 4 bis 6, wobei der zumindest eine Hilfskanal (144, 145) eine Länge und einen Querschnitt hat, die ausgebildet sind, eine Dämpfung für Vibrationen zu bewirken, welche ein vorher festgelegtes Frequenzfeld haben.

8. Hydroelastisches Lager nach Anspruch 7, wobei das vorher festgelegte Frequenzfeld im Wesentlichen zwischen 80 Hz und 180 Hz liegt.

9. Hydroelastisches Lager nach einem der Ansprüche 4 bis 8, wobei die zumindest eine Hilfskammer (142, 143) in ihrem Inneren ein Entkopplungselement (180) aufweist.

10. Hydroelastisches Lager nach Anspruch 9, wobei das Entkopplungselement (180) aus geschlossenzelligem Schwamm-Elastomer hergestellt ist.

11. Hydroelastisches Lager nach einem der vorhergehenden Ansprüche, wobei der Außenanker (120) zumindest eine Öffnung (124a-d) hat, über welche ein darüber geformter Bereich (138, 140, 135) der Elastomer-Masse (120) verläuft, die dazu dient, eine jeweilige Arbeits-, Expansions- oder Hilfskammer (132, 134, 142, 143) zu begrenzen.

12. Hydroelastisches Lager nach Anspruch 11, wobei die zumindest eine Öffnung (124a-d) längs eines Teils ihrer Kontur einen hervortretenden Rand (126a-d) hat, der radial nach außen gerichtet ist und ausgebildet ist, Bereiche der Elastomer-Masse (130) längs der Wände zumindest eines Verbindungskanals (136) oder der Hilfskammern (142, 143) zu verstärken.

13. Hydroelastisches Lager nach einem der vorhergehenden Ansprüche, wobei der Außenanker (120) aus Stahl durch Tiefziehen hergestellt ist.

14. Hydroelastisches Lager nach einem der Ansprüche 1 bis 12, wobei der Außenanker (120) aus thermoplastischem Material durch Formen oder aus wärmeaushärtendem Material hergestellt ist.

15. Hydroelastisches Lager nach einem der vorhergehenden Ansprüche, wobei der Außenanker (120) zwei Teile umfasst, welche miteinander zusammengebaut sind.

16. Hydroelastisches Lager nach einem der vorhergehenden Ansprüche, wobei der Innen- und der Außenanker ein fester im Querschnitt prismatischer Kern (110) bzw. ein im Wesentlichen zylindrischer Anker (120) koaxial zum Kern (110) sind.

17. Hydroelastisches Lager nach einem der vorhergehenden Ansprüche, wobei die Arbeitskammer (132) ein gewölbeartiges Teil aufweist, das begrenzt ist durch
zumindest ein Armpaar (138) der Elastomer-Masse (130), welche den Innenanker (110) und den Außenanker (120) verbindet; und
zumindest ein Membranwandpaar (140) der Elastomer-Masse (130), welche zwischen den Armen (138) und dem Innenanker (110) und dem Außenanker (120) angeordnet ist.

18. Vibrationssystem, welches ein Vibrationselement und ein Lagerelement umfasst, welche miteinander über ein hydroelastisches Lager (1) nach einem der vorhergehenden Ansprüche verbunden sind.

## Revendications

1. Montage hydroélastique (1) adapté pour être interposé entre un élément vibrant et un élément de support, en particulier pour le raccordement entre une unité de propulsion et une structure de châssis d'un véhicule, comprenant un boîtier (20) destiné à être raccordé à l'élément de support et à loger un corps (10) comprenant :
une armature interne (110) destinée à être raccordée à l'élément vibrant ;
une armature externe sensiblement tubulaire (120) entourant l'armature interne (110) ; et
une masse élastomère (130) raccordant et logeant l'armature interne (110) et l'armature externe (120), et définissant :
- une chambre de travail (132) ouverte dans la périphérie radiale de ladite masse élastomère (130) ; et
- une chambre d'expansion (134) qui contient un fluide adapté pour se déplacer entre cette dernière et la chambre de travail (132) via un conduit de raccordement associé (136), et qui est élaborée à l'intérieur de ladite masse élastomère (130) et définie par celle-ci ; et
ladite chambre de travail (132) et ladite chambre d'expansion (134) comprenant au moins une paroi respective élastiquement déformable (138, 140, 135) et étant fermées par le boîtier (20) de manière étanche aux fluides ;
ledit premier conduit de raccordement comprenant une rainure façonnée en canal (136) ;
ledit montage hydroélastique étant **caractérisé en ce que**
ladite rainure façonnée en canal est ménagée dans la périphérie radiale de la masse élastomère (130) et fermée de manière étanche aux fluides par le boîtier (20) et comprend :
- une première et une seconde sections (136a, 136c) qui s'étendent respectivement sous la forme d'une section presque circonférentielle et d'une section presque mi-circonférentielle le long de deux bordures axiales de la périphérie radiale de la masse élastomère (130), et
- une section intermédiaire (136b) raccordant la première et la seconde sections (136a, 136c) ;
**en ce que** la chambre d'expansion (134) est ouverte dans la périphérie radiale de la masse élastomère (130) et est diamétralement opposée à la chambre de travail (132); et
**en ce que** l'armature externe (120), à chacune de ses extrémités faisant saillie vers l'extérieur, a une bride de collerette (122), recouverte de ladite masse élastomère (130) et coopérant avec le boîtier (20) pour assurer une étanchéité aux fluides de la rainure (136).

2. Montage hydroélastique selon la revendication 1, dans lequel la première et la seconde sections (136a, 136c) communiquent respectivement avec la chambre d'expansion (134) et la chambre de travail (132).

3. Montage hydroélastique selon la revendication 1 ou 2, comprenant en outre une seconde chambre de travail et une seconde chambre d'expansion placées dans une direction sensiblement orthogonale par rapport à celle (A-A) définie par la première chambre de travail (132) et la première chambre d'expansion (134), et susceptible de contenir un fluide adapté pour se déplacer entre elles via au moins un second conduit de raccordement.

4. Montage hydroélastique selon l'une quelconque des revendications précédentes, dans lequel la masse élastomère (130) définit en outre au moins une autre chambre auxiliaire (142, 143) ouverte dans la périphérie de ladite masse élastomère (130) et communiquant avec ladite au moins une chambre de travail (132) à l'aide d'au moins un conduit auxiliaire (144, 145).

5. Montage hydroélastique selon la revendication 4, dans lequel ledit au moins un conduit auxiliaire comprend une rainure façonnée en canal (144, 145) ménagée dans la périphérie de la masse élastomère (130).

6. Montage hydroélastique selon la revendication 4 ou 5, ayant une première et une seconde chambres auxiliaires (142, 143) placées dans la masse élastomère (130) dans des positions diamétralement opposées par rapport à l'armature interne (110).

7. Montage hydroélastique selon l'une quelconque des revendications 4 à 6, dans lequel ledit au moins un conduit auxiliaire (144, 145) a une longueur et une section adaptées pour provoquer un amortissement des vibrations ayant un champ de fréquence prédéterminé.

8. Montage hydroélastique selon la revendication 7, dans lequel ledit champ de fréquence prédéterminé est sensiblement compris entre 80 Hz et 180 Hz.

9. Montage hydroélastique selon l'une quelconque des revendications 4 à 8, dans lequel ladite au moins une chambre auxiliaire (142, 143) comprend à l'intérieur un élément de découplage (180).

10. Montage hydroélastique selon la revendication 9, dans lequel l'élément de découplage (180) est formé d'un élastomère alvéolaire à cellules fermées.

11. Montage hydroélastique selon l'une quelconque des revendications précédentes, dans lequel l'armature externe (120) a au moins une ouverture (124a-d) à travers laquelle passe une partie surmoulée (138, 140, 135) de la masse élastomère (130) destinée à définir une chambre respective de travail, d'expansion ou auxiliaire (132, 134, 142, 143).

12. Support hydroélastique selon la revendication 11, dans lequel ladite au moins une ouverture (124a-d) a, le long d'une partie de son contour, un bord saillant (126a-d) tourné radialement vers l'extérieur et adapté pour renforcer des parties de la masse élastomère (130) le long des parois dudit au moins un conduit de raccordement (136) ou desdites chambres auxiliaires (142, 143).

13. Support hydroélastique selon l'une quelconque des revendications précédentes, dans lequel l'armature externe (120) est fabriquée en acier par emboutissage profond.

14. Montage hydroélastique selon l'une quelconque des revendications 1 à 12, dans lequel l'armature externe (120) est fabriquée en matériau thermoplastique par moulage ou en matériau thermodurcissable.

15. Support hydroélastique selon l'une quelconque des revendications précédentes, dans lequel l'armature externe (120) comprend deux parties assemblées l'une à l'autre.

16. Montage hydroélastique selon l'une quelconque des revendications précédentes, dans lequel les armatures interne et externe sont respectivement un noyau plein à section prismatique (110) et une armature sensiblement cylindrique (120) coaxiale avec ledit noyau (110).

17. Montage hydroélastique selon l'une quelconque des revendications précédentes, dans lequel la chambre de travail (132) comprend une partie en forme de voûte définie par
au moins un couple de bras (138) de la masse élastomère (130) raccordant l'armature interne (110) et l'armature externe (120) ; et
au moins un couple de parois de membrane (140) de la masse élastomère (130) interposée parmi les bras (138) et lesdites armatures interne (110) et externe (120).

18. Système vibrant comprenant un élément vibrant et un élément de support interconnectés par un montage hydroélastique (1) selon l'une quelconque des revendications précédentes.
